(19) Europäisches Patentamt
European Patent Office
Office européen des brevets

(11) **EP 3 063 508 B1**

(12) **EUROPEAN PATENT SPECIFICATION**

(45) Date of publication and mention
of the grant of the patent:
**04.04.2018 Bulletin 2018/14**

(51) Int Cl.:
***G01F 1/66*** *(2006.01)*

(21) Application number: **14789577.5**

(22) Date of filing: **28.10.2014**

(86) International application number:
**PCT/EP2014/073113**

(87) International publication number:
**WO 2015/063079 (07.05.2015 Gazette 2015/18)**

(54) **A FLOW METER FOR ULTRASONICALLY MEASURING THE FLOW VELOCITY OF FLUIDS**

DURCHFLUSSMESSER ZUM ULTRASCHALLMESSEN DER STRÖMUNGSGESCHWINDIGKEIT VON FLÜSSIGKEITEN

DÉBITMÈTRE POUR MESURE ULTRASONIQUE DE LA VITESSE D'ÉCOULEMENT DE FLUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2013 EP 13190423**

(43) Date of publication of application:
**07.09.2016 Bulletin 2016/36**

(73) Proprietor: **Technical University of Denmark**
**2800 Kgs. Lyngby (DK)**

(72) Inventors:
• **WILLATZEN, Morten**
**DK-2100 Copenhagen Ø (DK)**
• **GRAVESEN, Jens**
**DK-2830 Virum (DK)**
• **NØRTOFT, Peter**
**DK-2400 København NV (DK)**

(74) Representative: **Høiberg P/S**
**Adelgade 12**
**1304 Copenhagen K (DK)**

(56) References cited:
**EP-B1- 0 801 311       DE-A1- 4 335 394**
**DE-A1-102004 027 546       US-A1- 2008 022 776**

## Description

### Field of invention

The invention relates to a flow meter and a method for ultrasonically measuring the flow velocity of fluids.

### Background of the Invention

Ultrasonic flow meters for measuring a fluid velocity in a duct are known and widely used. They normally comprise two transducers which are used to generate and sense ultrasonic pulses. The transducers then measure the transit time or difference in phase of the ultrasonic pulses propagating in and against the direction of flow. By use of the transit times or phase change the average fluid velocity and the speed of sound in the fluid can be calculated. Normally the ultrasonic pulse is emitted from a first transducer in a direction angled in relation to the direction of the flow and then reflected, either by use of a specific reflector or the internal surface of the duct, to be received by a second transducer situated upstream or downstream from the first transducer.

In prior art there has been attempts to increase the accuracy of ultrasonic flow meters. It is known that the sensitivity is increased when the flow velocity is increased. Therefore a venturi tube is sometimes used to increase the flow velocity in a short section of the flow meter such that the velocity can be measured with higher accuracy. With knowledge of the geometry of the venture tube it is possible to determine the flow velocity in the system. A disadvantage of using a venture tube is that it creates a pressure drop, and the pressure drop increases as the sensitivity increases.

In prior art there has also been attempts on increasing the sensitivity by using ultrasonic signals that consist of standing waves.

DE 43 35 394 discloses an ultrasonic flow meter for measuring small flows accurately by use of standing waves. A standing wave (at a harmonic resonance frequency) is generated between two transducers placed opposite to each other with an unobstructed line-of-sight between them, and the flow is determined from the change in the standing wave frequency, or the resonance frequency, at different flows. To maintain the standing wave at different flows, it is required to change the frequency. Thus, the flow measurement is based on the use of at least two acoustic standing waves, or resonance frequencies, and broadband transducers are a requirement in order to adjust the frequency of the transducers when the flow velocity changes.

EP 0 801 311 discloses an ultrasonic flow meter, where the sensitivity to environmental changes, such as temperature, is reduced. The flow is measured based on a travelling wave and a harmonic standing wave between the transducers, which is maintained by changing the frequency. Thus, the flow is also in this invention determined by use of multiple frequency measurements.

DE 10 2004 027 546 A1 discloses an ultrasonic flow meter having a duct with a constant cross sectional area. The flow measurement is performed at a single frequency.

### Summary of the invention

Accurate measurements of fluid flow velocities play a pivotal role in a wide range of engineering applications. It is therefore a purpose of the present invention to provide a flow meter for ultrasonically measuring the flow velocity of fluids with a higher sensitivity than prior art flow meters, preferably without generating a pressure drop. Furthermore, it is a purpose of the present invention to provide a flow meter that is simple to construct and operate, and cheap to manufacture.

A first embodiment therefore relates to a flow meter according to claim 1. A further aspect relates to a method according to claim 9. A further aspect relates to a method for determining the acoustic resonance frequency according to claim 14. A further aspect relates to a method for determining the positions of transducers according to claim 15. The invention relates to a flow meter for ultrasonically measuring the flow velocity of fluids comprising a duct having a flow channel, with an internal cross section, where through the fluid flows, and at least two transducers for generating and sensing ultrasonic pulses, wherein the ultrasonic pulses are transmitted into the flow channel such that it propagates through the fluid, whereby the flow velocity is determined based on, the transit time or phase of the ultrasonic pulses or change of the ultrasonic pulse, wherein the internal cross section comprises variations which generate an acoustic resonance within the flow channel for a specific ultrasonic frequency and that the ultrasonic pulse has the specific ultrasonic frequency.

The flow meters and methods listed above can be combined with any of the features as disclosed herein and below.

The combination of a duct geometry with a cross section variation, and measurements at the specific ultrasonic frequency at which the duct geometry generates an acoustic resonance, makes it possible to enhance the sensitivity of flow meters in some duct geometries by at least an order of magnitude and hereby provide a flow meter with a significantly improved accuracy.

Furthermore, it is possible to obtain the enhanced sensitivity of the flow meter by a simple measurement. Instead of measuring at multiple frequencies, the flow meter can be operated at a single, selected specific ultrasonic frequency, thereby making it more simple to construct and operate and cheaper to manufacture.

Acoustic resonance is to be interpreted as a spatial localized resonance which at certain frequencies is particularly sensitive to a background flow in the flow channel. The known type of acoustic resonance disclosed in the prior art is the resonance associated with standing waves and the harmonics or overtones of the fundamental standing wave generated between two transducers. The present invention relates to an acoustic resonance generated by variations in the internal cross section of a duct having a flow channel and utilizing this acoustic resonance for ultrasonic measurements to obtain an increased sensitivity of the presently disclosed flow meter.

The flow meter according to the invention can be in the form of a flow cell to be inserted in the flow path. A flow cell is an apparatus with an inlet and an outlet that can form part of the flow path for the fluid and includes the transducers mounted to generate and sense the ultrasonic pulses in the appropriate configuration. In another embodiment the flow meter is an apparatus that is mounted on or situated temporarily on a part of the flow path such as a pipe.

Change of the ultrasonic pulse is to be understood as change in the shape and/or size of the ultrasonic pulse, such as change in amplitude and/or form of the pulse.

The internal cross section is defined by the internal borders of the duct in a plane transverse to the direction of the flow. The variations of the internal cross section can be changes in the shape of the duct where the area of the internal cross section is kept constant. It can also be changes in the area of the internal cross section and/or a combination of any of the above.

The specific ultrasonic frequency can be a predefined frequency for a given flow meter. The predefined ultrasonic frequency can be selected such that it corresponds to an acoustic resonance frequency generated by the variations in the internal cross section. The variations in the internal cross section can generate an acoustic resonance frequency, i.e. a frequency at which the acoustic response is strongly affected by the background flow in the flow channel. I.e. this resonance frequency is different from the resonance frequency associated with the harmonics of a standing wave generated between two transducers positioned at a distance of an integer multiple of half wavelengths.

The predefined ultrasonic frequency may be selected based on a chosen flow channel with variations, wherein the transducers are situated such that an ultrasonic pulse generated by the first transducer can be sensed by the second transducer. The signal strength is then determined (either by measurements and/or by modelling) at a representative flow velocity for a plurality of frequencies, preferably in the form of a frequency sweep within a selected range. The predefined ultrasonic frequency is then selected as the frequency where acoustic resonance is observed.

Alternatively, the predefined ultrasonic frequency is chosen, and the signal strength is determined (either by measurements and/or by modelling) for different variations of the flow channel. The flow channel geometry disclosing an acoustic resonance at the predefined ultrasonic frequency is then selected for the measurements. Not part of the invention, the internal cross section has a constant area. The internal cross section can change form for example from a circular to an oval cross section. Further, the duct can have turns and/or be twisted or in any other way altered, as long as the area of the internal cross section is kept constant. This is one way of generating an acoustic resonance in the fluid flow for a specific frequency. According to the invention, the variations in the internal cross section comprise area variations of the internal cross section. The cross sectional area is then changed in order to generate an acoustic resonance in the fluid flow for a specific frequency.

The area variations may comprise an enlarged part of the flow channel. I.e. the enlarged part may comprise an enlargement of the area of the internal cross section. By using one or more enlarged parts to generate the acoustic resonance no significant pressure drop is generated, as opposed to the use of a venturi duct. An enlarged part can also be denoted as a bulge in the duct, and can for example be an inverted venturi. It has been found that by use of an enlarged part, the acoustic resonance for a specific frequency can be substantially enhanced. This effect is further enhanced if the ultrasonic pulses propagate through the fluid in an enlarged part. This can for example be done by positioning at least one of the transducers such that the ultrasonic pulse enters and/or is emitted within the enlarged part.

In another embodiment the flow channel comprises at least two enlarged parts. It has been found that by use of two enlarged parts the acoustic resonance for a specific frequency can be substantially enhanced. This effect is further enhanced if the ultrasonic pulses propagate through the fluid in an enlarged part. This can for example be done by positioning at least one of the transducers such that the ultrasonic pulse enters or is emitted within the enlarged part.

In a further embodiment the flow velocity is determined based on the transit time or phase of ultrasonic pulses propagating in and against the direction of the fluid flow. A difference in the transit time and phase is closely related and is a measure for the same. The difference in phase can therefore be interpreted as a measure for the difference in transit time.

In a further embodiment the flow velocity is determined based on a change in the amplitude of the ultrasonic pulse. This is a way of determining the flow velocity that can be used instead or in combination with determination by use of the transit time or phase of ultrasonic pulses propagating in and against the direction of the fluid flow as mentioned above.

In yet a further embodiment the specific ultrasonic frequency is determined by measuring and/or modelling the signal strength of the received ultrasonic pulse for a plurality of transmitted frequencies. When designing a flow meter according to the invention a frequency sweep can be performed in order to find a frequency which generated the highest signal strength. This can be done by choosing a specific duct wherein the internal cross section comprises variations and subsequently generate a fluid flow in the duct. A frequency sweep can then be performed in a predefined interval, and it can be observed at which frequencies increased signal strength is sensed by the transducers. The interval for the frequency sweep can be within a testing interval, such as 25 to 35 kHz. Signal strength can be interpreted to be the difference in transit time, difference in phase or the peak amplitude of the ultrasonic pulses.

At the specific ultrasonic frequency, i.e. the acoustic resonance frequency generated by the variations in the internal cross section, the acoustic field within the flow meter generated by emitting identical ultrasonic pulses transducers upstream and downstream will not be mirror images of each other with respect to their geometric centre. This asymmetry in the field pattern will depend on the geometry of the variations in the internal cross section and the flow speed.

The measured transit time or phase change of an ultrasonic pulse will depend on the position of the transducers.

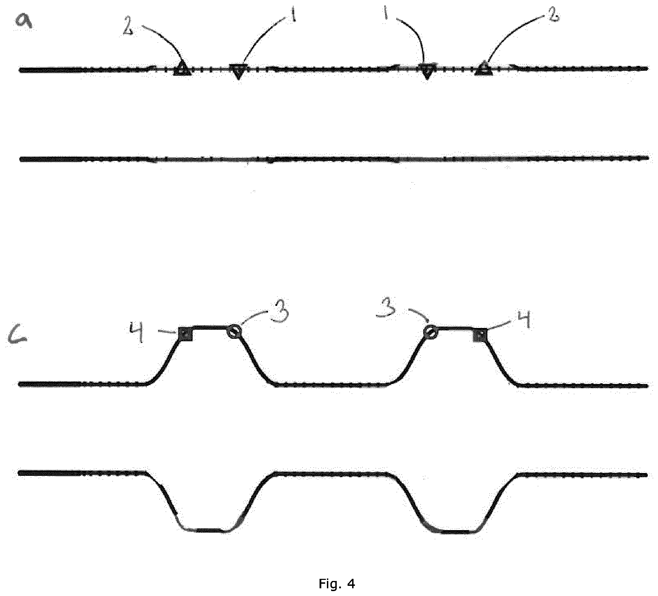

In a further embodiment the positions of the at least two transducers are selected to be where the perturbation of the ultrasonic pulse is largest. The positions of the at least two transducers may be selected to be where the transit time or phase change of the ultrasonic pulse is largest. An example of such a position is in the embodiment comprising two enlarged parts, where the pulses propagate through the fluid in the enlarged parts, and the transducers are positioned such that the ultrasonic pulse enters and/or is emitted within the enlarged parts, as illustrated in Fig. 4c.

Further, the positions of the at least two transducers may be selected to be where the perturbation of the ultrasonic pulse is largest, irrespective of an unobstructed line-of-sight between them. For example they may be positioned such that they are not placed facing opposite to each other.

The invention also relates to a method according to claim 9. Thus, it is possible to improve the accuracy of the determination of the flow velocity of a fluid in a flow channel. Furthermore, it is possible to obtain the improved accuracy by a simple measurement, comprising measuring at a single and selected, specific ultrasonic frequency. Variations in the internal cross section comprise area variations of the internal cross section. Area variations can lead to an acoustic resonance for a specific frequency. The acoustic resonance for a specific frequency can be perturbed by the flow through the flow channel. Accordingly, this is a method for controlling an acoustic field in the fluid flow. According to the invention, the area variations comprise at least one enlarged part of the flow channel, the enlarged part comprising an enlargement of the area of the internal cross section. The perturbation of the acoustic resonance is especially large, if the ultrasonic pulse propagates through an enlarged part of the flow channel. Hence, in an embodiment, the method comprises a flow channel comprising an enlarged part. In a further embodiment, the method comprises ultrasonic pulse propagation through the enlarged part of the flow channel.

In another embodiment, the use of two enlarged parts is especially suitable for generating a large perturbation of the acoustic resonance for specific frequencies. The perturbation of the acoustic resonance is especially large, if the ultrasonic pulse propagates through an enlarged part of the flow channel. Hence, in an embodiment, the method comprises a flow channel with at least two enlarged parts. In a further embodiment, the method comprises ultrasonic pulse propagation through an/the enlarged part(s) of the flow channel.

In an embodiment, the specific ultrasonic frequency is determined by measuring the signal strength of the received ultrasonic pulse for a plurality of transmitted frequencies. This is a method for determining the specific frequency to be used.

In an embodiment, the flow velocity is determined based on change of the ultrasonic pulse such that the change at least partly includes the change in amplitude of the ultrasonic pulse. Thus, the velocity can be determined by emitting one ultrasonic pulse which propagates through the fluid flow and then sensing it, the change in amplitude can then give the fluid velocity. If the emitted ultrasonic pulse shape is known, only the signal from the sensor is necessary for determining the flow velocity.

In an embodiment, the flow velocity is determined based on the difference in transit time or phase between ultrasonic pulses propagating in and against the direction of the fluid flow.

## Description of the drawings

The invention will in the following be described in greater detail with reference to the accompanying drawings:

Fig. 1    a schematic view of three duct geometries
Fig. 2    a graph of the acoustic response for three duct geometries
Fig. 3    an example of the acoustic pressure field for three duct geometries
Fig. 4    a cross sectional view of different duct geometries and transducer positions
Fig. 5    graph of signal strengths for flow meters

**Detailed description of the invention**

Flow meters are used in a variety of applications such as house hold plumbing (e.g. measuring the usage of gas and/or water), offshore (e.g. measuring gas and/or oil flow) and in industrial productions where a large variety of fluids are used. If the flow velocity is known, for a specific fluid, it is possible to determine the mass flow.

It is desirable to be able to measure the flow velocity as precisely as possible. However, this can be a challenge, among other things due to the conventional low signal to noise ratio and it is especially difficult for low flow velocities. The present invention regards a flow meter that has a higher sensitivity, a higher to signal to noise ratio than prior art flow meters and can therefore determine the flow velocity more precisely, also at low flow velocities. Furthermore, the present invention regards a flow meter where the measurement can be based on a simple measurement at a single and selected, specific ultrasonic frequency.

The state of a fluid flow in a duct is characterised by the velocity $u = (u,v)$, the pressure $p$, and the density $\rho$. These variables are governed by the Navier-Stokes and the mass continuity equation. By introducing an acoustic source $g$ and making the necessary approximations, the following equation for the acoustic pressure $\tilde{p}$ in a two dimensional flow channel (duct) can be derived:

$$\nabla^2 \tilde{p} + k^2 \tilde{p} + \frac{2i}{\omega}\left(k^2 u_0 \cdot \nabla \tilde{p} - \frac{\partial u_0}{\partial x} \cdot \nabla \frac{\partial \tilde{p}}{\partial x} - \frac{\partial u_0}{\partial y} \cdot \nabla \frac{\partial \tilde{p}}{\partial y}\right) = g$$

where the $k \equiv \omega/c$ is the wavenumber, $c$ is the speed of sound in the medium, $\omega$ denotes the acoustic angular frequency, $u_0$ is the background flow field of the fluid, and $i$ is the imaginary unit.

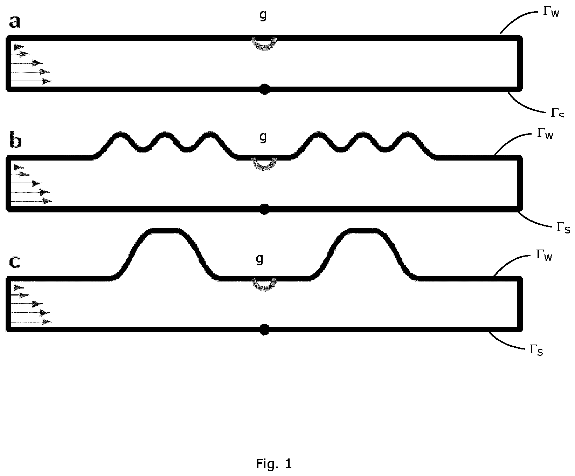

In fig. 1a, b and c three different duct geometries are shown. The ducts are shown as symmetric ducts; such that the boundary; $\Gamma_w$ is a hard wall boundary and $\Gamma_s$ is a symmetric boundary. The boundary conditions on both $\Gamma_w$ and $\Gamma_s$ are; $\nabla \tilde{p} \cdot n = 0$, where $n$ is the outward unit normal.

The duct in fig. 1 a is a straight duct having no variations of the internal cross section. The ducts shown in fig. 1b and c have area variations of the internal cross section. The variations for both duct geometries comprise an enlargement of the internal cross section. In the following the duct geometry of the duct shown in fig. 1b will be denoted a corrugated duct and the duct of fig. 1c will be denoted a bulged duct.

The arrows indicate the fluid flow, and are taken to be a purely horizontal, parabolic velocity profile. Further, an acoustic source $g$ is situated at the centre of the duct. In the following the ducts duct geometries shown in fig. 1 are evaluated further. The ducts are considered to have a height of 0.02 m and a length of 0.2 m, for duct a) and b) the height is defined as the height outside the enlarged parts. Further, the fluid flowing in the ducts is considered to be air.

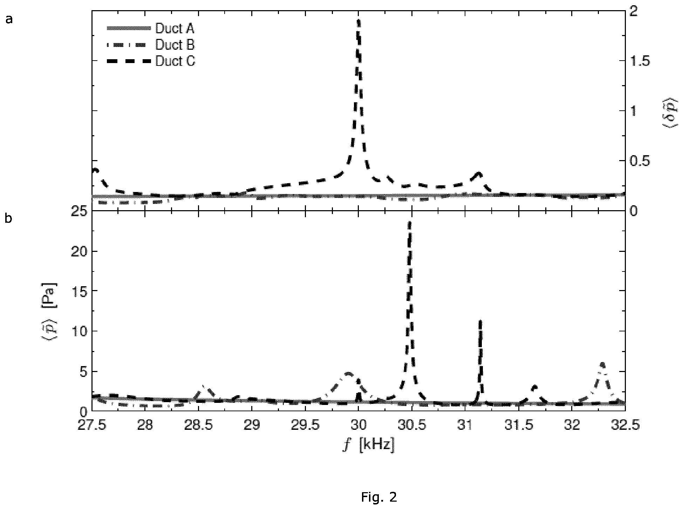

In fig 2 is shown graphs of how the acoustic response depends on the frequency for the three duct geometries a, b and c of fig. 1. The mean flow speed has been set to 1 m/s. Fig. 2a shows the relative symmetry deviation of the acoustic pressure $\langle \delta \tilde{p} \rangle$ and fig. 2b shows the mean acoustic pressure $\langle \tilde{p} \rangle$, both for frequencies in the range 27.5 to 32.5 kHz.

As can be seen on fig. 2a no significant changes for $\langle \delta \tilde{p} \rangle$ are observed for a straight duct (a), while the corrugated duct (b) shows some changes with frequency. For the bulged duct (c), however, several peaks are observed, and the strongest one occurs for f = 30 kHz, where the signal experiences an increase by a factor of ~10 compared to the two other ducts.

In Fig. 2b the dependence of $\langle \tilde{p} \rangle$ on frequency can be seen, $\langle \tilde{p} \rangle$ shows little change in the investigated frequency range for the straight duct (a), whereas several peaks are observed both for the corrugated duct (b) and the bulged duct (c). For f = 30 kHz, the bulged duct (c) displays a local maximum.

Accordingly, the duct geometry and sound frequency can be chosen such that the ultrasonic pulse exhibits a particularly high sensitivity to the background flow. A flow meter, measuring an air flow with the velocity in the order of 1 m/s, having the bulged duct (c) and an ultrasonic pulse with a frequency of 30 kHz enables the determination of the flow velocity with significantly higher precision than prior art flow meters.

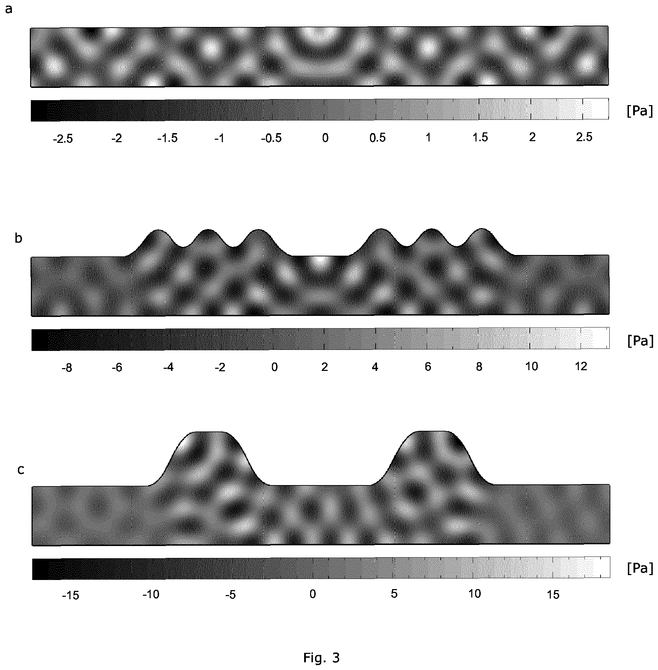

To further illustrate the connection between an acoustic resonance and the frequency as shown in fig. 2, fig. 3 depicts the real part of the acoustic pressure field for the frequency f = 30 kHz in each of the three ducts (corresponding to a map of the acoustic field for the selected flow channel geometries, fluid flow and frequency, which may be obtained by flow-acoustic models such as described in the present description). Both the straight duct (a) and the corrugated duct (b) exhibit high degrees of symmetry in the acoustic pressure field. In the bulged duct (c), however, the acoustic field is clearly asymmetric.

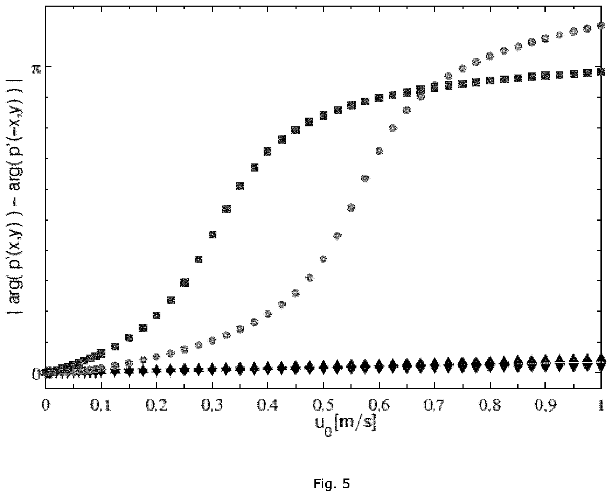

Fig. 5 is a graph that shows the difference in phase (a measure for the difference in transit time) between ultrasonic pulses propagating in and against the direction of the fluid flow for different duct geometries and for different transducer positions. The ultrasonic pulses have a frequency of 30 kHz. It is desired to have a large phase difference as it will make the signal less prone to noise and improves the accuracy of the determined flow velocity.

Two duct geometries are considered: The straight duct of fig. 4a, (identical to the geometry of fig. 1 a) and a bulged duct of fig. 4c (identical to the geometry of fig. 1 c). The ducts are shown in fig. 4 in a cross sectional view.

Two different transducer positions for each of the duct geometries are shown. The transducers are positioned in pairs such that each transducer both generates and senses ultrasonic pulses from the other transducer. The transducers are angled such that the ultrasonic pulse propagates from a transducer reflected on the opposite duct wall and then sensed by the other transducer. The transducers are connected to a control unit (not shown) which is adapted to process the signals from the transducers and thereby determine the flow velocity of the fluid flowing in the duct.

For the straight duct fig. 4a two transducer positions, a first position 1 and a second position 2 are evaluated. The phase difference as a function of flow velocity for the straight duct is shown in fig. 5 for each of the transducer positions. "▼" (a triangle with the tip pointing downwards) denotes the phase difference for the first transducer position 1, whereas for the second transducer position 2 it is shown as "▲" (a triangle with the tip pointing upwards). From the graph of fig. 5 it can be seen that the second transducer position 2 has a slightly larger phase difference than the first transducer position 1, however, the phase difference is almost the same for the two transducer positions. This difference can be ascribed to the larger axially difference between the transducers in the second position 2 compared to the first position.

Turning to the bulged duct of fig 4c there are considered two transducer positions; a third position 3 and a fourth position 4. In both the transducer positions 3, 4 the transducers are positioned in the enlarged part such that the ultrasonic pulse propagates through the fluid in the enlarged part. The transducers at the third position 3 in fig. 4c and the transducer at the first position 1 in fig. 4a are situated, in the respective duct, at the same axially distance from each other. In the same way the two transducers at the second position 2 and the fourth position 4, in fig. 4a and 4c respectively, are positioned at the same axially distance from each other. On fig. 5 the phase difference for ultrasonic pulses propagating in and against the direction of the fluid flow is for the third transducer position 3 denoted "○" (a circle) and for the fourth transducer position 4 denoted "□" (a square).

It can be seen on fig. 5 that the phase difference (and accordingly the transit time) of the ultrasonic pulses are significantly larger for the transducers in the bulged duct compared to the transducers in the straight duct. Further, it can be seen that for the bulged duct geometry, the fourth transducer position 4 has a stronger signal (phase difference) compared to the third transducer position 3 when the flow speed is below 0.68 m/s. However, the third transducer position 3 has the largest signal (phase difference) when the flow speed is above 0.68 m/s. This large increase in the phase cannot be ascribed to the slightly larger distance that the ultrasonic pulse needs to travel in the bulged duct (c) compared to the straight duct (a). The increase in the phase difference is generated because the bulged duct (c) has variations in the cross section and because the specific frequency is chosen to be 30 kHz.

When an embodiment of the invention is to be constructed it can be done in the following way: A flow channel with variations is chosen. Subsequently, transducers are situated such that ultrasonic pulses can be generated by a transducer and after propagating through the fluid sensed by the other transducer. Then the signal strength is measured for a plurality of frequencies, preferably in the form of a sweep of an interval of frequencies, for a representative flow velocity in the velocity interval. If no acoustic resonance is observed then the duct geometry has to be changed and a new frequency sweep performed. If a perturbation of the acoustic resonance is identified the frequency that generates the perturbation is chosen for the flow meter.

It is also possible to construct an embodiment of the invention by choosing a specific ultrasonic frequency and then measure the signal strength for different variations of the geometry of the flow channel in order to identify an acoustic resonance.

**Claims**

1. A flow meter for ultrasonically measuring the laminar flow velocity of fluids comprising:

- a duct having a flow channel with an internal cross section, and
- at least two transducers (3, 4) for generating and sensing ultrasonic pulses,

configured to transmit ultrasonic pulses into the flow channel such that the ultrasonic pulses propagate through a fluid flowing in the flow channel, **characterised in that**
the internal cross section comprises an area variation of the internal cross section, configured to generate at least one acoustic resonance in the relative symmetry deviation of the acoustic pressure within the flow channel for a predefined, single, specific ultrasonic frequency, selected as the frequency where the acoustic resonance is observed,
wherein the area variations comprise an enlarged part of the flow channel, the enlarged part comprises an enlargement of the area of the internal cross section, and
wherein the flow meter is configured to determine the laminar flow velocity of the fluid flowing in the flow channel based on a change in transit time, phase and/or pulse, such as amplitude and/or form of the ultrasonic pulses, of said specific ultrasonic frequency.

2. The flow meter according to claim 1 wherein the flow channel comprises at least two enlarged parts.

3. The flow meter according to any of the claims 1 to 2, wherein the ultrasonic pulses propagate through the fluid in an enlarged part.

4. The flow meter according to any of the preceding claims, wherein the flow velocity is determined based on the transit time or phase of ultrasonic pulses propagating in and against the direction of the fluid flow, and/or wherein the flow velocity is determined based on a change in the amplitude of the ultrasonic pulse.

5. The flow meter according to any of the preceding claims, wherein the specific ultrasonic frequency is determined by measuring and/or modelling the signal strength of the received ultrasonic pulse for a plurality of transmitted frequencies.

6. The flow meter according to any of the preceding claims, wherein the positions of the at least two transducers are selected to be where the perturbation of the ultrasonic pulses are largest.

7. The flow meter according to any of the preceding claims, wherein the positions of the at least two transducers are selected to be where the transit time or phase change of the ultrasonic pulses are largest.

8. The flow meter according to any of the preceding claims, wherein the positions of the at least two transducers are selected to be where the perturbation of the ultrasonic pulses are largest, irrespective of an unobstructed line-of-sight between them; for example they may be positioned such that they are not placed facing opposite to each other.

9. Method for determining the laminar flow velocity of a fluid flowing in a flow channel, the method comprising the steps of;

- providing the flow meter according to claim 1,
- generating an acoustic resonance in the flow channel, for a predefined, single, specific ultrasonic frequency, by use of variations in the internal cross section,
- transmitting ultrasonic pulses with said specific ultrasonic frequency into the flow channel by use of at least one transducer, such that the ultrasonic pulses propagate through the fluid,
- sensing the transmitted ultrasonic pulses by use of at least one transducer, and
- determining the laminar flow velocity of the fluid based on the change in transit time or phase of the ultrasonic pulses or change of the ultrasonic pulse, at said specific ultrasonic frequency.

10. Method according to claim 9, wherein the area variations comprise at least one enlarged part of the flow channel, the enlarged part comprising an enlargement of the area of the internal cross section.

11. Method according to claim 10, wherein the ultrasonic pulse propagates through an enlarged part of the flow channel.

12. Method according to any of the claims 9-11, wherein the specific ultrasonic frequency is determined by measuring the signal strength of the received ultrasonic pulse for a plurality of transmitted frequencies.

13. Method according to any of the claims 9-12, wherein the flow velocity is determined based on a change of the ultrasonic pulse such that the change at least partly includes the change in amplitude of the ultrasonic pulse, and/or wherein the flow velocity is determined based on the difference in transit time or phase between ultrasonic pulses propagating in and against the direction of the fluid flow.

14. A method for determining the acoustic resonance frequency for a flow meter according to any of claims 1-8, comprising a flow channel comprising variations in the internal cross section, the method comprising the steps of:

a. generating a fluid flow within the flow channel,

b. transmitting ultrasonic pulses at a selected starting frequency into the flow channel by use of at least one transducer, such that the ultrasonic pulses propagate through the fluid,

c. sensing the transmitted ultrasonic pulses by use of at least one transducer,

d. measuring and/or modelling the signal strength of the received ultrasonic pulses, the signal being a difference in transit time, a difference in phase and/or a change of the pulses,

e. repeating step a-d for a plurality of transmitted frequencies, optionally performed as a frequency sweep within a predefined interval of frequencies, and

f. selecting the frequency at which the highest signal strength is measured, thereby determining the acoustic resonance frequency of said duct comprising said internal cross section variations.

15. A method for determining the positions of transducers within a flow meter according to any of claims 1-8, comprising a flow channel comprising variations in the internal cross section, such that a maximal perturbation of the ultrasonic pulses is detected, the method comprising the steps of:

a. selecting a flow channel geometry, fluid flow velocity, and measurement frequency,

b. mapping the acoustic field for the selected flow channel geometry, fluid flow and measurement frequency, preferably by means of flow-acoustic models, and

c. determining positions wherein the acoustic field is maximal asymmetric, thereby determining the positions of transducers, wherein a maximal perturbation of the ultrasonic pulses is detected.

## Patentansprüche

1. Durchflussmesser zum Ultraschallmessen der laminaren Strömungsgeschwindigkeit von Flüssigkeiten, Folgendes umfassend:

- einen Durchgang mit einem Durchflusskanal mit einem internen Querschnitt, und

- mindestens zwei Transducer (3,4) für das Erzeugen und Erkennen von Ultraschallimpulsen, konfiguriert, um Ultraschallimpulse derart in den Strömungskanal zu übertragen, dass die Ultraschallimpulse sich durch eine Flüssigkeit, die in dem Strömungskanal fließt, ausbreiten, **dadurch gekennzeichnet, dass** der interne Querschnitt eine Bereichsvariation des internen Querschnitts umfasst, konfiguriert, um mindestens eine Akustikresonanz der relativen Symmetrieabweichung des Akustikdrucks innerhalb des Strömungskanals für eine vordefinierte, einzelne, spezifische Ultraschallfrequenz zu generieren, die als die Frequenz ausgewählt wird, bei der die Akustikresonanz festgestellt wird, wobei die Bereichsvariationen einen vergrößerten Teil des Strömungskanals umfassen, wobei der vergrößerte Teil eine Vergrößerung des Bereichs des internen Querschnitts umfasst, und wobei der Durchflussmesser konfiguriert ist, um die laminare Strömungsgeschwindigkeit der Flüssigkeit, die in dem Durchflusskanal fließt, basierend auf einer Änderung von Durchlaufzeit, Phase und/oder Impuls zu bestimmen, wie beispielsweise Amplitude und/oder Form der Ultraschallimpulse der spezifischen Ultraschallfrequenz.

2. Durchflussmesser nach Anspruch 1, wobei der Strömungskanal mindestens zwei vergrößerte Teile umfasst.

3. Durchflussmesser nach einem der Ansprüche 1 bis 2, wobei die Ultraschallimpulse sich durch Flüssigkeit in einen vergrößerten Teil ausbreiten.

4. Durchflussmesser nach einem der vorhergehende Ansprüche, wobei die Strömungsgeschwindigkeit basierend auf der Durchlaufzeit oder Phase von Ultraschallimpulsen bestimmt wird, die sich in der und gegen die Richtung der Flüssigkeitströmung ausbreiten, und/oder wobei die Strömungsgeschwindigkeit basierend auf einer Änderung der Amplitude des Ultraschallimpulses bestimmt wird.

5. Durchflussmesser nach einem der vorhergehenden Ansprüche, wobei die spezifische Ultraschallfrequenz durch Messen und/oder Modellieren der Signalstärke des empfangenen Ultraschallimpulses für eine Vielzahl von übertragenen Frequenzen bestimmt wird.

6. Durchflussmesser nach einem der vorhergehenden Ansprüche, wobei die Positionen der mindestens zwei Transducer ausgewählt werden, um dort angeordnet zu werden, wo die Perturbationen des Ultraschallimpulses am größten sind.

7. Durchflussmesser nach einem der vorhergehenden Ansprüche, wobei die Positionen der mindestens zwei Transducer ausgewählt werden, um dort angeordnet zu werden, wo die Durchlaufzeit- oder Phasenänderung der Ultraschallimpulse am größten sind.

8. Durchflussmesser nach einem der vorhergehenden Ansprüche, wobei die Positionen der mindestens zwei Transducer ausgewählt werden, um dort angeordnet zu werden, wo die Perturbation der Ultraschallimpulse am größten ist, ungeachtet einer ungehinderten Sichtlinie zwischen ihnen; beispielsweise können sie derart positioniert sein, dass sie nicht einander gegenüberliegend platziert sind.

9. Verfahren zum Bestimmen der laminaren Strömungsgeschwindigkeit einer in einen Strömungskanal fließenden Flüssigkeit, wobei das Verfahren die folgenden Schritte umfasst:

   - Bereitstellen des Durchflussmessers nach Anspruch 1;
   - Generieren einer Akustikresonanz in dem Strömungskanal, für eine vordefinierte, einzelne, spezifische Ultraschallfrequenz, durch Verwenden von Variationen in dem internen Querschnitt,
   - Übertragen von Ultraschallimpulsen mit der spezifischen Ultraschallfrequenz in den Strömungskanal durch Verwenden von mindestens einem Transducer, derart, dass sich die Ultraschallimpulse durch die Flüssigkeit ausbreitet,
   - Erfassen der übertragenen Ultraschallimpulse durch Verwenden von mindestens einem Transducer, und
   - Bestimmen der laminaren Strömungsgeschwindigkeit der Flüssigkeit basierend auf der Änderung der Durchlaufzeit oder Phase der Ultraschallimpulse oder der Änderung des Ultraschallimpulses, bei der spezifischen Ultraschallfrequenz.

10. Verfahren nach Anspruch 9, wobei die Bereichsvariationen mindestens einen vergrößerten Teil des Strömungskanals umfassen, wobei der vergrößerte Teil eine Vergrößerung des Bereichs des internen Querschnitts umfasst.

11. Verfahren nach Anspruch 10, wobei sich der Ultraschallimpuls durch einen vergrößerten Teil des Strömungskanals ausbreitet.

12. Verfahren nach einem der Ansprüche 9 bis 11, wobei die spezifische Ultraschallfrequenz durch Messen der Signalstärke des empfangenen Ultraschallimpulses für eine Vielzahl von übertragenen Frequenzen bestimmt wird.

13. Verfahren nach einem der Ansprüche 9 - 12, wobei die Strömungsgeschwindigkeit basierend auf einer Änderung des Ultraschallimpulses derart bestimmt wird, dass die Änderung mindestens teilweise die Änderung der Amplitude des Ultraschallimpulses beinhaltet, und/oder wobei die Strömungsgeschwindigkeit basierend auf der Differenz der Durchlaufzeit oder Phase zwischen Ultraschallimpulsen, die sich in der und gegen die Richtung der Flüssigkeitsströmung ausbreiten, bestimmt wird.

14. Verfahren zum Bestimmen der akustischen Resonanzfrequenz für einen Durchflussmesser nach einem der Ansprüche 1 bis 8, einen Strömungskanal mit Variationen in dem internen Querschnitt umfassend, wobei das Verfahren die folgenden Schritte umfasst:

   a. Generieren einer Flüssigkeitsströmung innerhalb des Strömungskanals,
   b. Übertragen von Ultraschallimpulsen bei einer ausgewählten Startfrequenz in den Strömungskanal durch Verwenden von mindestens einem Transducer, derart, dass die Ultraschallimpulse sich durch die Flüssigkeit ausbreiten,
   c. Erfassen der übertragenen Ultraschallimpulse durch Verwenden von mindestens einem Transducer,
   d. Messen und/oder Modellieren der Signalstärke der empfangenen Ultraschallimpulse, wobei das Signal eine Durchlaufzeitdifferenz, eine Phasendifferenz und/oder Änderung der Impulse darstellt,
   e. Wiederholen der Schritte a - d für eine Vielzahl von übertragenen Frequenzen, optional als ein Frequenz-Sweep innerhalb eines vordefinierten Frequenzintervalls durchgeführt, und
   f. Auswählen der Frequenz, an der die höchste Signalstärke gemessen wird, wodurch die Akustikresonanzfrequenz des die internen Querschnittsvariationen umfassenden Kanals bestimmt wird.

15. Verfahren zum Bestimmen der Positionen der Transducer in einem Durchflussmesser nach einem der vorhergehenden Ansprüche 1 - 8, einen Strömungskanal mit internen Querschnittsvariationen umfassend, derart, dass die maximal Perturbation der Ultraschallimpulse erfasst wird, wobei das Verfahren die folgenden Schritte umfasst:

a. Auswählen einer Strömungskanalgeometrie, Flüssigkeitsströmungsgeschwindigkeit und Messfequenz,

b. Zuordnung des Akustikfeldes für die ausgewählte Strömungskanalgeometrie, Flüssigkeitsströmung und Messfrequenz, vorzugsweise durch Strömungsakustikmodelle, und

c. Bestimmen von Positionen, an denen das Akustikfeld maximal asymmetrisch ist, wodurch die Positionen von Transducern bestimmt werden, an denen eine maximal Perturbation von den Ultraschallimpulsen erfasst wird.

**Revendications**

1. Débitmètre pour mesurer par ultrasons la vitesse d'écoulement laminaire de fluides comprenant :

   - un conduit ayant un canal d'écoulement avec une section transversale interne, et
   - au moins deux transducteurs (3, 4) pour générer et détecter des impulsions ultrasonores, configurés pour transmettre des impulsions ultrasonores dans le canal d'écoulement de sorte que les impulsions ultrasonores se propagent à travers un fluide s'écoulant dans le canal d'écoulement, **caractérisé en ce que**

   la section transversale interne comprend une variation d'aire de la section transversale interne, configurée pour générer au moins une résonance acoustique dans l'écart de symétrie relatif de la pression acoustique au sein du canal d'écoulement pour une fréquence ultrasonore spécifique unique prédéfinie, sélectionnée en tant que fréquence où la résonance acoustique est observée,

   dans lequel les variations d'aire comprennent une partie agrandie du canal d'écoulement, la partie agrandie comprend un agrandissement de l'aire de la section transversale interne, et

   dans lequel le débitmètre est configuré pour déterminer la vitesse d'écoulement laminaire du fluide s'écoulant dans le canal d'écoulement d'après un changement de temps de transit, de phase et/ou d'impulsion, tel que l'amplitude et/ou la forme des impulsions ultrasonores, de ladite fréquence ultrasonore spécifique.

2. Débitmètre selon la revendication 1, dans lequel le canal d'écoulement comprend au moins deux parties agrandies.

3. Débitmètre selon l'une quelconque des revendications 1 à 2, dans lequel les impulsions ultrasonores se propagent à travers le fluide dans une partie agrandie.

4. Débitmètre selon l'une quelconque des revendications précédentes, dans lequel la vitesse d'écoulement est déterminée d'après le temps de transit ou la phase d'impulsions ultrasonores se propageant dans et contre la direction de l'écoulement de fluide, et/ou dans lequel la vitesse d'écoulement est déterminée d'après un changement de l'amplitude de l'impulsion ultrasonore.

5. Débitmètre selon l'une quelconque des revendications précédentes, dans lequel la fréquence ultrasonore spécifique est déterminée en mesurant et/ou en modélisant l'intensité de signal de l'impulsion ultrasonore reçue pour une pluralité de fréquences transmises.

6. Débitmètre selon l'une quelconque des revendications précédentes, dans lequel les positions des au moins deux transducteurs sont sélectionnées pour être là où la perturbation des impulsions ultrasonores est la plus grande.

7. Débitmètre selon l'une quelconque des revendications précédentes, dans lequel les positions des au moins deux transducteurs sont sélectionnées pour être là où le changement de temps de transit ou de phase des impulsions ultrasonores est le plus grand.

8. Débitmètre selon l'une quelconque des revendications précédentes, dans lequel les positions des au moins deux transducteurs sont sélectionnées pour être là où la perturbation des impulsions ultrasonores est la plus grande, indépendamment d'une ligne de vision libre entre eux ; par exemple ils peuvent être positionnés de façon à ne pas être placés orientés face à face à l'opposé l'un de l'autre.

9. Procédé de détermination de la vitesse d'écoulement laminaire d'un fluide s'écoulant dans un canal d'écoulement, le procédé comprenant les étapes de :

   - fourniture du débitmètre selon la revendication 1,
   - génération d'une résonance acoustique dans le canal d'écoulement, pour une fréquence ultrasonore spécifique unique prédéfinie, grâce à l'utilisation de variations de la section transversale interne,

- transmission d'impulsions ultrasonores avec ladite fréquence ultrasonore spécifique dans le canal d'écoulement grâce à l'utilisation d'au moins un transducteur, de sorte que les impulsions ultrasonores se propagent à travers le fluide,
- détection des impulsions ultrasonores transmises grâce à l'utilisation d'au moins un transducteur, et
- détermination de la vitesse d'écoulement laminaire du fluide d'après le changement de temps de transit ou de phase des impulsions ultrasonores ou le changement de l'impulsion ultrasonore, à ladite fréquence ultrasonore spécifique.

**10.** Procédé selon la revendication 9, dans lequel les variations d'aire comprennent au moins une partie agrandie du canal d'écoulement, la partie agrandie comprenant un agrandissement de l'aire de la section transversale interne.

**11.** Procédé selon la revendication 10, dans lequel l'onde ultrasonore se propage à travers une partie agrandie du canal d'écoulement.

**12.** Procédé selon l'une quelconque des revendications 9 à 11, dans lequel la fréquence ultrasonore spécifique est déterminée en mesurant l'intensité de signal de l'onde ultrasonore reçue pour une pluralité de fréquences transmises.

**13.** Procédé selon l'une quelconque des revendications 9 à 12, dans lequel la vitesse d'écoulement est déterminée d'après un changement de l'impulsion ultrasonore de sorte que le changement comporte au moins en partie le changement d'amplitude de l'impulsion ultrasonore et/ou dans lequel la vitesse d'écoulement est déterminée d'après la différence de temps de transit ou de phase entre des impulsions ultrasonores se propageant dans et contre la direction de l'écoulement de fluide.

**14.** Procédé de détermination de la fréquence de résonance acoustique pour un débitmètre selon l'une quelconque des revendications 1 à 8, comprenant un canal d'écoulement comprenant des variations de la section transversale interne, le procédé comprenant les étapes de :

a. génération d'un écoulement de fluide au sein du canal d'écoulement,
b. transmission d'impulsions ultrasonores à une fréquence de démarrage sélectionnée dans le canal d'écoulement grâce à l'utilisation d'au moins un transducteur, de sorte que les impulsions ultrasonores se propagent à travers le fluide,
c. détection des impulsions ultrasonores transmises grâce à l'utilisation d'au moins un transducteur,
d. mesure et/ou modélisation de l'intensité de signal des impulsions ultrasonores reçues, le signal étant une différence de temps de transit, une différence de phase et/ou un changement des impulsions,
e. répétition des étapes a à d pour une pluralité de fréquences transmises, facultativement réalisées en tant que balayage de fréquence au sein d'un intervalle de fréquences prédéfini, et
f. sélection de la fréquence à laquelle l'intensité de signal la plus élevée est mesurée, déterminant ainsi la fréquence de résonance acoustique dudit conduit comprenant lesdites variations de section transversale interne.

**15.** Procédé de détermination des positions de transducteurs au sein d'un débitmètre selon l'une quelconque des revendications 1 à 8, comprenant un canal d'écoulement comprenant des variations de la section transversale interne, de sorte qu'une perturbation maximale des impulsions ultrasonores soit détectée, le procédé comprenant les étapes de :

a. sélection d'une géométrie de canal d'écoulement, d'une vitesse d'écoulement de fluide, et d'une fréquence de mesure,
b. mise en correspondance du champ acoustique pour la géométrie de canal d'écoulement, l'écoulement de fluide et la fréquence de mesure sélectionnés, de préférence au moyen de modèles d'écoulement-acoustique, et
c. détermination de positions dans lesquelles le champ acoustique est asymétrique au maximum, déterminant ainsi les positions de transducteur, dans lequel une perturbation maximale des impulsions ultrasonores est détectée.

Fig. 1

Fig. 2

a

b

c

Fig. 3

Fig. 4

Fig. 5

**EP 3 063 508 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4335394
- EP 0801311 A

- DE 102004027546 A1

**17**